Europäisches Patentamt

European Patent Office

Office européen des brevets

(11) Publication number: **0 240 130 B1**

# EUROPEAN PATENT SPECIFICATION

(45) Date of publication of patent specification: **02.09.92**    (51) Int. Cl.⁵: **B23K 7/00**, B22D 11/126

(21) Application number: **87301501.0**

(22) Date of filing: **20.02.87**

(54) **Apparatus and method for removing dross ridges from a metal workpiece.**

(30) Priority: **25.08.86 US 834834**
**02.04.86 US 847421**

(43) Date of publication of application:
**07.10.87 Bulletin 87/41**

(45) Publication of the grant of the patent:
**02.09.92 Bulletin 92/36**

(84) Designated Contracting States:
**AT BE CH DE FR GB IT LI LU NL SE**

(56) References cited:
**DE-C- 119 847**
**DE-C- 893 605**
**US-A- 2 301 923**
**US-A- 4 390 167**

**PATENT ABSTRACTS OF JAPAN, vol. 7, no.
197 (M-239)[1342], 27th August 1983; & JP - A
- 58 97473 (KAWASAKI SEITETSU K.K.)
09-06-1983**

(73) Proprietor: **KEIBLER-THOMPSON CORPORA-
TION
130 Entrance Drive
New Kensington Pennsylvania 15068(US)**

(72) Inventor: **Mancuso, Matthew Alan
158 Shearer Road
New Kensington Pennsylvania 15068(US)**

(74) Representative: **Bankes, Stephen Charles Dig-
by et al
BARON & WARREN 18 South End Kensington
London W8 5BU(GB)**

## Description

The present invention relates to an apparatus and method for removing dross ridges from metal workpieces, such as slabs, blooms, billets, or the like.

In the production of steel by, for example, the continuous casting process, the continuous cast length emerging from the caster is cut into desired lengths to form separate metal workpieces, which are commonly referred to as slabs, blooms, or billets. The separate workpieces are then subjected to subsequent processing, as by rolling, to form a finished steel product.

The cutting operation as described above is conventionally performed by means of a flame or torch, wherein a jet of high purity oxygen is directed against the workpiece while it is heated to the oxygen ignition temperature. The resulting exothermic chemical reaction between the iron and oxygen produces slag or waste, which consists of iron oxide, metallic iron and other alloy elements. This slag or waste is in the molten state, and it is displaced during the cutting operation and a portion thereof forms a ridge of the material along the lower edge of the cut end. Upon cooling, the material solidifies and adheres to the workpiece surface along the bottom surface adjacent the cut end, and forms what is commonly called a "dross ridge".

The formation of the dross ridges on the work-piece presents problems in the further processing thereof. For example, a dross ridge may drop off in the reheat furnace, which requires that it then be removed, thus involving additional labor. Also, in the event the dross ridge remains adhered to the workpiece during reheating, it is laminated into the steel during rolling of the workpiece, resulting in an inferior product.

Heretofore, the dross ridges resulting from a torch cutting operation have been removed by a process involving inverting the workpiece and removing the dross ridges with scarfing torches. However, the required additional handling of the workpiece entails additional equipment and labor. Mechanical chippers or chisels have been employed for this purpose, but this also is a labor intensive process.

U.S. patent No. 2,301,923 suggests a process for dross removal which involves immediately cooling the slag as it emerges from the cut, and so that it rapidly solidifies and may be easily removed by a subsequent mechanical operation. This prior patent also states that it has been previously proposed to remove such slag formations from a hot workpiece by means of a shear, but it is indicated that this prior proposal was not entirely satisfactory since the shear was subject to slag accumulation due to its hot condition.

More recent U.S. patent No. 4,390,167 discloses the use of rotary metal cutters for removal of slag of the described type from an advancing workpiece, and this patent also discloses that the cutters may take the form of a plurality of tools arranged on a vertically movable mount. However, these cutters appear to be able to remove dross ridges only along one of the ends of the workpiece, and it is believed the cutters would be subject to jamming and would require substantial maintenance.

JP-A-58-97473 discloses a dross removing device wherein a blade is mounted on a pivoting lever below an ingot conveying path, the lever being pivoted upwards by a hydraulic cylinder to bring the blade into contact with the underside of the ingot to remove the dross ridge as the ingot passes.

DE-C-893605 discloses a planing machine designed to operate during forward and reverse passes of the workpiece. A planing tool positioned above the workpiece has cutting blades along two opposite edges and is mounted so as to be capable of a slight pivoting movement to bring one cutting edge into contact with the workpiece surface during a forward pass and the other into contact during a reverse pass.

The present invention provides apparatus for removing a dross ridge along an edge of a metal workpiece of the type resulting from a torch cutting operation or the like, and comprising:

a conveyor for supporting and selectively advancing a metal workpiece in opposite directions along a horizontal path of travel;

a cutting blade mounted for pivotal movement, about a fixed longitudinal horizontal axis below said path of travel and extending transversely thereto, between an operative position in which the blade can engage the underside of a workpiece to remove a dross ridge therefrom and a neutral position in which the blade is clear of the workpiece, and actuating means for selectively pivoting the cutting blade about said longitudinal axis;

characterised in that the cutting blade has an upper surface and a pair of longitudinally extending opposite sides, said sides each defining a longitudinally extending cutting edge at the junction of the respective side with said upper surface, and is pivotable about said axis to a neutral position wherein said upper surface is parallel to and spaced from said path of travel to allow workpiece to pass clear of the blade, to a first tilted position wherein one of said cutting edges is positioned to engage the underside of the workpiece, and remove a dross ridge therefrom as it passes in one direction and to a second tilted

2

EP 0 240 130 B1

position wherein the other of said cutting edges is positioned to engage the underside of the workpiece and remove another dross ridge therefrom as it passes in the opposite direction.

The apparatus of the invention can be used for removing dross ridges without requiring the inverting or other complex manipulation of the workpiece, and may be installed in a conventional workpiece conveying line with a minimum of alteration thereto. The workpiece may be either hot or cold.

The apparatus of the present invention may be mounted in a metal workpiece conveying line, either on existing conveyor roll foundations or on a separate foundation, and with the horizontal or neutral position of the cutting blade being slightly below the pass line of the lower surface of the metal workpiece. In one embodiment of the invention, a workpiece having a dross ridge along its lower surface at each end is passed over the cutting blade, while the blade is in its neutral position. The blade is then tilted so that the cutting edge which faces the trailing end of the workpiece is raised into contact with the surface of the workpiece, and so that the raised cutting edge engages and shears the dross ridge adjacent the trailing end. The advance of the workpiece is then reversed, and the blade is pivoted to its opposite tilted position so that the other cutting edge is raised, and so that the dross ridge at the leading end of the workpiece is engaged and removed. In another embodiment, the method may be performed by terminating the advance of the workpiece after the leading end passes the cutting blade. The advance of the workpiece is then reversed, and the blade is tilted so that one of the cutting edges engages the surface of the workpiece and then engages and removes the dross ridge at the leading end of the workpiece. The advance of the workpiece is again reversed to its original direction, and the blade is tilted to its opposite position so that the opposite cutting edge engages and removes the dross ridge at the trailing end of the workpiece.

As will be apparent, the apparatus and method of the present invention are adapted to remove dross ridges from a hot metal workpiece, i.e., at its casting or rolling temperature, or at ambient temperature. Also, the dross ridge which is sheared from the surface of the workpiece tends to drop off, and there is no substantial buildup or accumulation thereof on the cutting blade, and the cutting blade remains relatively cool when operating on a hot workpiece since there is little surface contact between the blade and workpiece.

Some of the objects and advantages of the present invention having been stated, others will appear as the description proceeds, when taken in conjunction with the accompanying drawings, in which --

Figure 1 is a perspective view of a continuous metal casting machine and the dross removal apparatus in accordance with one embodiment of the present invention;

Figure 2 is a fragmentary perspective view of the apparatus shown in Figure 1 and illustrating one workpiece in an intermediate position wherein the dross ridge at its trailing end is removed;

Figure 3 is a view similar to Figure 2 and illustrating the workpiece in a subsequent position and wherein the dross ridge at the leading end is removed;

Figure 4 is a schematic flow diagram illustrating another embodiment of the method of the present invention;

Figure 5 is a side elevation view of a modified embodiment of the workpiece conveying line;

Figure 6 is a side elevation view of another embodiment of the workpiece conveying line;

Figure 7 is a top plan view of the apparatus and the workpiece;

Figure 7A is a view similar to Figure 7 but illustrating an embodiment having an idler support roller; and

Figure 8 is a schematic illustration of the control system for the apparatus.

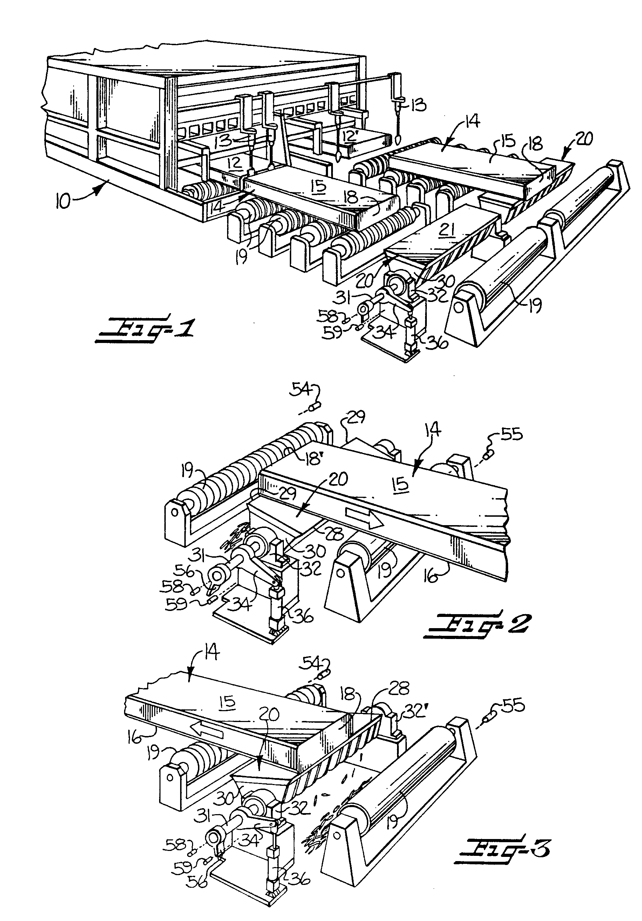

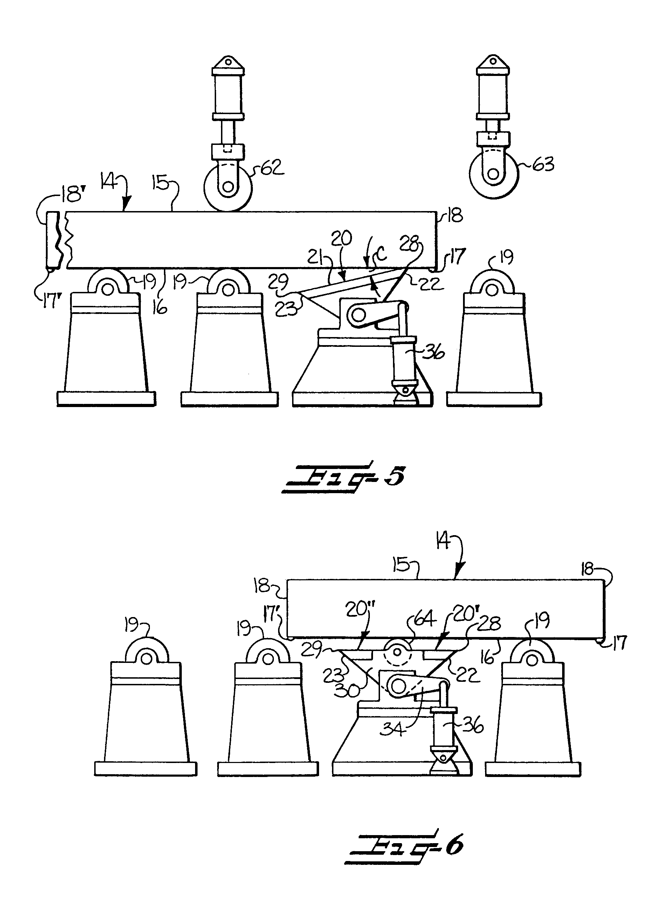

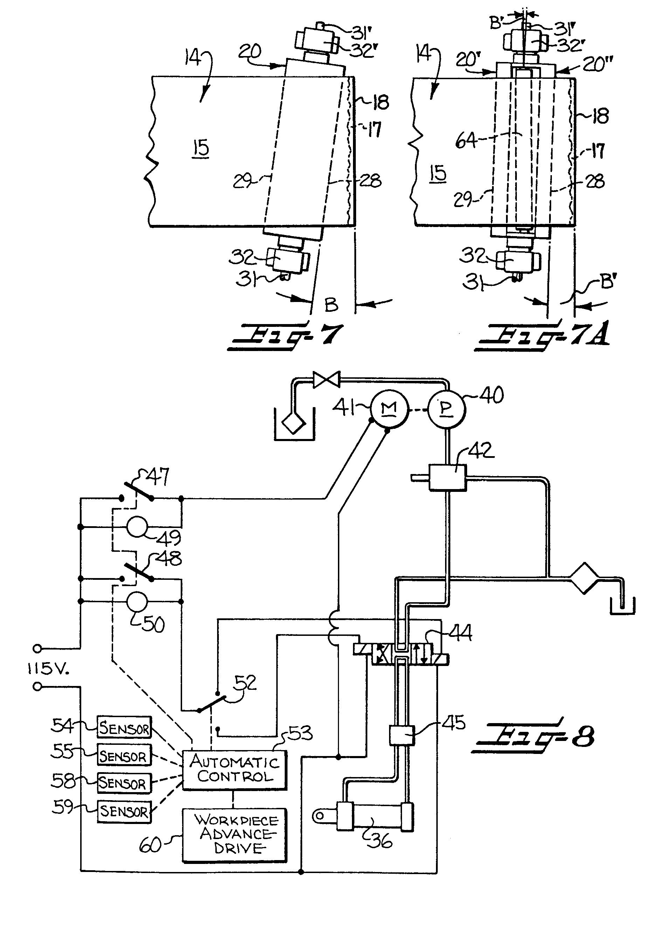

Referring more particularly to the drawings, Figure 1 illustrates a conventional steel casting machine 10, of a type which is adapted to form two parallel continuous castings 12, 12'. An oxygen cutting torch 13 is mounted at the downstream end of each output line, to cut the castings into separate slabs, blooms, or billets, which are referred to herein as workpieces 14. As best seen in Figure 5, each workpiece 14 has an upper surface 15, a lower surface 16, a leading end 18, and a trailing end 18'. Also, the workpiece includes a dross ridge 17, 17' formed on the lower surface adjacent the leading end 18 and the trailing end 18' of the workpiece, respectively.

The apparatus includes conveyor means in the form of a series of driven conveyor rolls 19, for advancing each workpiece along a horizontal path of travel, with the direction of the advance being such that the ends 18, 18' and the dross ridges 17, 17' are disposed perpendicular to the path of travel. However, this orientation may not be exactly perpendicular, since the torches 13 may be set to cut the workpieces at the angle, or the workpieces may shift on the rolls 19. In addition, the conveyor rolls 19 are adapted to selectively advance each workpiece in opposite directions along a horizontal path of travel, and in the manner further described below.

The apparatus of the present invention further comprises a cutting blade 20 mounted transversely across and below the path of travel of each workpiece 14. Each cutting blade 20 comprises a generally flat upper surface 21, which has a rectangular configuration in plan, and the blade includes opposite sides 22,

3

23 and opposite ends 25, 26 which define a lengthwise direction therebetween. The length of the blade is somewhat greater than the width of the workpiece being processed. The opposite sides 22, 23 each form an acute angle A with respect to the upper surface (note Figure 5) with the angle A preferably being in the range from 25° to 60°. The side 22 thus defines a longitudinally extending straight first cutting edge 28 at the junction of the side 22 and the upper surface 21, and the side 23 defines an opposite longitudinally extending straight cutting edge 29 at the junction of the side 23 and the upper surface 21.

The cutting blade 20 is mounted for pivotal movement about a lengthwise axis which is spaced from and parallel to each of the cutting edges 28 and 29. Also, the cutting blade is positioned immediately adjacent and below the workpiece path of travel, and such that the lengthwise pivotal axis of the cutting blade extends across the path of travel. This mounting means includes a support member 30 which underlies substantially the full area of the blade, and the support member includes stub shafts 31, 31' projecting from the opposite ends thereof and which are coaxially disposed along the lengthwise pivotal axis of the blade. As best seen in Figures 1-3, a pillow block bearing 32 journals the stub shaft 31, and a similar bearing 32' is provided for the shaft 31'. The stub shaft 31 extends through its support bearing and carries a lever arm 34, the arm 34 being held by a key (not shown) for rotation with the shaft 31. Alternatively, the key may be in the form of a shear pin which serves to prevent damage to the apparatus or workpiece in the event of an accidental collision with the apparatus. Connected to the outer end of the lever arm 34 is a movable piston rod end of a hydraulic cylinder 36. The base of the cylinder 36 is connected by a pin to a suitable foundation, with the foundation also mounting the bearing blocks 32, 32'.

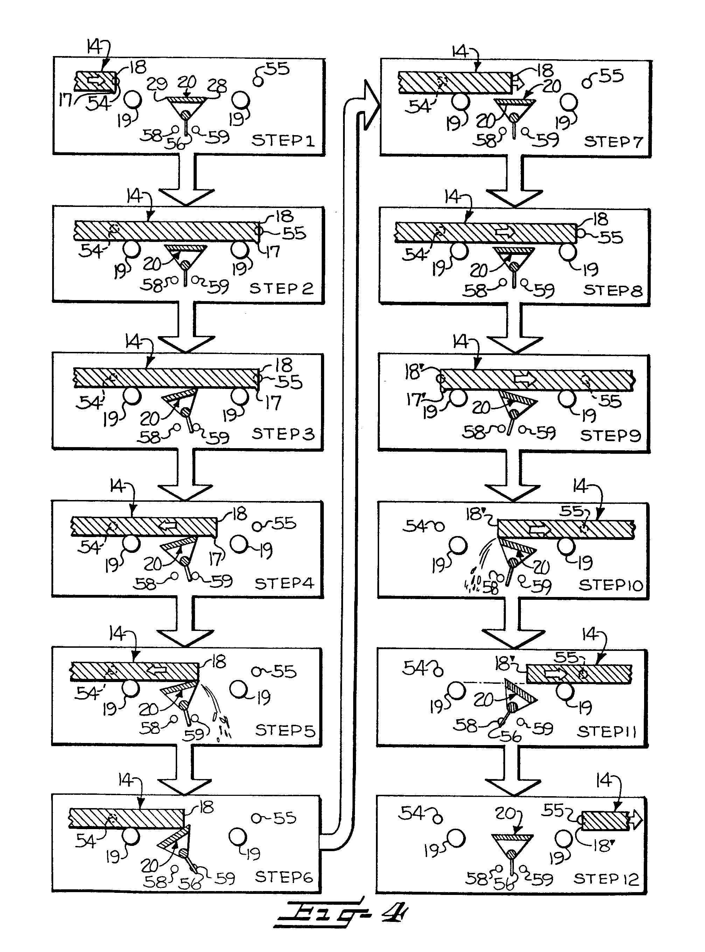

The apparatus of the present invention further includes means for selectively pivoting the cutting blade about the lengthwise axis defined by the shafts 31, 31', and such that the blade may be selectively pivoted to a neutral position as shown in Figure 1 and wherein the upper surface 21 of the cutting blade 20 is parallel to and spaced from the adjacent surface 16 of the workpiece 14 advancing along the path of travel. The blade 20 may also be pivoted to a first tilted position (Figure 3) wherein the cutting edge 28 is adapted to engage the adjacent surface 16 of the workpiece, and to a second oppositely tilted position (Figure 2) wherein the cutting edge 29 is adapted to engage the surface 16 of the workpiece. This pivoting means for the cutting blade is illustrated schematically in Figure 8. More particularly, there is provided a hydraulic pump 40 driven by a motor 41 which provides the motive fluid through a pressure relief valve 42 to a solenoid actuated four-way valve 44 for the hydraulic cylinder 36. A holding valve 45 is provided between the four-way valve 44 and the cylinder 36, and a first switch 47 is provided for actuating the pump motor 41, and a second switch 48 energizes the solenoid valve control circuits. Preferably, indicator lights 49 and 50 are also controlled by the switches 47 and 48, respectively. The control of the solenoid valve 44 is by means of a switch 52, which in turn is operatively connected to the central control 53. Alternatively, the switches 47, 48, and 52 may be manually activated.

To provide for the automatic operation of the apparatus, the control means further includes a pair of workpiece position sensors located adjacent the workpiece path of travel, as indicated schematically at 54, 55 in Figures 2, 3 and 4. Also, there is provided a position indicator 56 mounted on the shaft 31 of the cutting blade, and two sensors 58, 59 are fixedly mounted adjacent the indicator 56 for monitoring the rotational position of the blade. These four sensors, 54, 55, 58 and 59 are operatively connected to the central control 53 of the apparatus, and the central control 53 is adapted to operate the workpiece advance drive 60 for the rolls 19, in response to signals from these four sensors and as schematically indicated in Figure 8.

The cutting blade 20 is mounted such that its lengthwise pivotal axis extends across the path of travel of the workpiece 14. While the blade can extend so that its lengthwise axis, and thus the cutting edges 28, 29 are exactly perpendicular to the path of travel, is it preferable for the cutting edges to be disposed at an angle of at least about one degree with respect to a line which is perpendicular to the workpiece path of travel, and thus also with respect to the ends 18, 18' and dross ridges 17, 17'. Preferably, the cutting edges 28, 29 are disposed at an angle of between about 1 to 15° with respect to a line which is perpendicular to the path of travel, note angle B in Figure 7. In its neutral position, the surface 21 of the blade is slightly below a plane lying tangent to the upper surfaces of the conveyor rolls 19, and which corresponds to the location of the lower surface 16 of the workpiece, with a clearance of approximately 12,7-25,4mm (one half to one inch) being provided between the upper surface 21 of the blade and the conveyor plane. In addition, the cutting blade is sized and mounted such that the upper surface is at an angle C of at least about 1° and preferably about 10° with respect to the adjacent surface 16 of the workpiece in each of its two tilted positions, note Figure 5. The tilt of the blade should not be so great as to cause the cutting edge to dig into or scrape the bottom surface of the work piece, nor should the tilt be so shallow that the blade tends to jump over the dross ridge rather than engage and shear it off.

Figures 1-3 illustrate one embodiment of the method of the present invention. In this embodiment, the workpiece 14 is advanced by the conveyor rolls 19, and after the leading end 18 of the workpiece passes the blade 20, the blade is tilted so that the cutting edge 29 which opposes the dross ridge 17' at the trailing end of the workpiece is tilted into contact with the lower surface of the workpiece. As the workpiece continues to advance, the cutting edge 29 engages and removes the dross ridge 17' at the trailing end. Thereafter, the workpiece advance is reversed, and the blade is returned to its neutral position. The blade is then tilted in the opposite direction so that the cutting edge 28 engages the bottom surface of the workpiece, and continued movement of the workpiece in the reverse direction causes the cutting edge 29 to engage and remove the dross ridge 17. The advance of the workpiece is then again stopped and reversed so that it advances in the forward direction, and the blade is tilted to its neutral position where it awaits the next workpiece.

Figure 4 schematically illustrates a different embodiment of the method of the present invention. In this embodiment, the workpiece 14 is advanced in the forward direction until it spans the cutting blade (Steps 1 and 2). The sensor 55 is then activated, which acts through the central control 53 to stop the advance of the workpiece and to actuate the hydraulic cylinder 36 so as to pivot the blade and bring the forward cutting edge 28 into contact with the bottom surface of the workpiece (Step 3). The conveyor drive is then reversed (Step 4), moving the workpiece rearwardly, with the result that the cutting edge 28 engages and shears the dross ridge 17 at the forward end 18 of the workpiece (Step 5).

Following removal of the forward dross ridge 17 (Step 6), the conveyor drive is again stopped when the sensor 59 senses the blade has rotated past the plane of the lower surface 16 and thus past the forward end of the workpeice, and the blade is returned to its neutral position (Step 7), as determined by the sensors 58, 59. The workpiece is then again moved forwardly (Step 8), so as to position the workpiece across the blade. When the sensor 54 senses the trailing end 18', the blade is pivoted or tilted to bring the trailing cutting edge 29 into contact with the lower surface of the workpiece (Step 9), so that the cutting edge 29 engages the downstream dross ridge 17' to remove the same (Step 10). The cutting blade is then returned to its neutral position (Steps 11 and 12), as determined by the sensors 58 and 59.

Additional blade monitoring sensors may be provided, in order to permit the more accurate sensing of five positions of the blade, namely (1) the neutral position, (2) a forwardly tilted position in contact with the surface 16, (3) a maximum forwardly tilted position, (4) a reversely tilted position in contact with the lower surface 16, and (5) a maximum reversely tilted position.

As will be apparent from the above, the dross removal apparatus of the present invention can be used to remove dross ridges from torch or flame cut workpieces having a wide range of sizes and shapes, and the cutting blade may be modified to accept curved or round workpieces as well. Figure 5 illustrates a modification of the present invention and which includes pinch rolls 62 and 63, which are provided to support the workpiece relative to the blade 20, and which serve to prevent the lifting of the workpiece upon impact of a dross ridge with a cutting edge of the blade. Any conventional pinch roll construction may be used, and conventional drive means may be associated with the pinch rolls if desired to provide a positive advancing force to the workpiece as it moves across the blade and to prevent stalling of the workpiece when the blade contacts a dross ridge.

Another modification of the present invention is illustrated in Figure 6, wherein an idler support roller 64 is incorporated in the cutting blade to provide support for the workpiece. The idler support roller 64 is rotatably mounted to the support member 30, and it includes an outer surface portion which is coplanar with the upper surfaces of the rolls 19 when the blade 20 is pivoted to its neutral position as seen in Figure 6. As illustrated, this modification is particularly suitable in cases where the workpiece may not be long enough to be adequately supported by the other support rolls 19 while it is advanced over the cutting blade 20. The axis of the idler support roller 64 is mounted so as to be perpendicular to the workpiece path of travel, and thus when the pivoted axis of the blade 20 is disposed at the angle B' with respect to a line perpendicular to the path of travel as seen in Figure 7A, the axis of the roller 64 is disposed at the same angle B' with respect to the axis of the blade 20. Figure 6 also illustrates a modification of the cutting blade, and wherein the cutting blade is defined by a separate elements 20', 20'' which include the cutting edges 28, 29, and which are releasably attached to the support member 30 to facilitate replacement thereof.

It will be evident that in accordance with the present invention, a conventional "skid" or the like may be used as the supporting or conveying arrangement for the metal workpiece, and that conventional driven rolls, slab shifters, pusher rods or the like may be used to provide the advancing means for the workpiece. The dross removal apparatus of the present invention can also be used to remove dross ridges from the upper surface of a workpiece, by simply turning the workpiece over and mounting the cutting blade 20 in an inverted position above the workpiece. Also, the apparatus may remove dross ridges from cut sides of a workpiece, in addition to the cut ends, by having the cutting blade positioned squarely or obliquely with respect to the dross ridge along the cut side of the workpiece.

When known, automatic controls and sensing means are used with the dross removal apparatus of the invention, the cutting blade may be tilted from the horizontal or neutral position and to a tilted position where it is adapted to be engaged by the end of the advancing workpiece, to thereby serve as a means for locating the end of a new workpiece relative to the cutting blade. The cutting blade may then be tilted to the neutral position, permitting the dross ridge on the lower surface of the workpiece to pass over the cutting blade and so that the workpiece may overlie the cutting blade in accordance with the practice of the present invention as described above.

The following specific non-limiting example serves to further describe the above embodiments of the present invention.

Example

A series of dross removal tests were run on low carbon, steel plate workpieces in the following manner. In particular, a cutting blade was provided which was similar to that shown in Figure 1-3, and which was 25,4mm (one inch) thick, 152,4mm (six inches) wide, and 812,8mm (32 inches) in length. The blade was mounted so that its top surface formed an angle C of 10° with the bottom surface of the workpieces when tilted, and the blade had a cutting edge angle A of about 38°. The workpieces were at ambient temperature, and were 25,4mm (10 inches) thick, 558,8mm (22 inches) wide, and 762mm (30 inches) long, and the workpieces were cut across their width using a conventional oxy-acetylene cutting torch. A typical accumulation of dross adhered along the lower surface at each end of the workpiece after each cut, which was about 25,4mm (one inch) wide, 546,1mm (21 and 1/2 inches) long, and 11,1mm (7/16 inches) thick. The workpieces were supported on a roller conveyor table during each test, and they were pushed across the cutting blade by a hydraulic cylinder, mounted perpendicularly to the cut edge. The hydraulic cylinder had a bore of 63,5mm (2 and 1/2 inches) and pressure gauge mounted thereon.

In a first series of tests, the dross removal blade was set with the cutting edge of the blade parallel to the torch cut ends of the workpiece, and in a second series of tests the cutting edge was set at a five degree angle to the torch cut ends.

A summary of the force imparted to the cutting blade in order to remove dross ridges from the workpieces in the tests is reported in Table I below.

Table I

| Trial No. | Blade Parallel | Blade @ 5 Degree Angle |
|---|---|---|
| 1 | 38,14kN (8575lbs) | 11,44kN (2572.5lbs) |
| 2 | 39,23kN (8820lbs) | 10,35kN (2327.5lbs) |
| 3 | 30,51kN (6860lbs) | 10,9kN (2450lbs) |
| 4 | 23,98kN (5390lbs) | 10,9kN (2450lbs) |
| 5 | 35,42kN (7962.5lbs) | 11,44kN (2572.5lbs) |
| 6 | 37,05kN (8330lbs) | 10,9kN (2450lbs) |
| Average | 34,06kN (7656.25lbs) | 10,99kN (2470.4lbs) |

As shown in these results, the dross removal apparatus of the invention is able to remove dross from the torch cut ends of a metal workpiece with the blade parallel or angled with respect to the torch cut ends. However, it can also be seen from the results in Table I that the force required to remove a typical dross accumulation with the dross removal apparatus can be greatly reduced by angling the blade with respect to the torch cut ends.

## Claims

1. Apparatus for removing a dross ridge (17,17') along an edge of a metal workpiece (14) of the type resulting from a torch cutting operation or the like, and comprising:

a conveyor (19) for supporting and selectively advancing a metal workpiece in opposite directions along a horizontal path of travel;

a cutting blade (20) mounted for pivotal movement, about a fixed longitudinal horizontal axis below said path of travel and extending transversely thereto, between an operative position in which the blade can engage the underside of a workpiece to remove a dross ridge therefrom and a neutral position in which the blade is clear of the workpiece, and actuating means (34,36) for selectively pivoting the cutting blade about said longitudinal axis;

characterised in that the cutting blade (20) has an upper surface (21) and a pair of longitudinally extending opposite sides (22,23), said sides each defining a longitudinally extending cutting edge (28,29) at the junction of the respective side with said upper surface, and is pivotable about said axis to a neutral position wherein said upper surface is parallel to and spaced from said path of travel to allow workpiece to pass clear of the blade, to a first tilted position wherein one of said cutting edges (28) is positioned to engage the underside (16) of the workpiece, and remove a dross ridge therefrom as it passes in one direction and to a second tilted position wherein the other of said cutting edges (29) is positioned to engage the underside of the workpiece and remove another dross ridge therefrom as it passes in the opposite direction.

2. Apparatus according to claim 1 wherein said upper surface (21) of the cutting blade is generally flat, and each of said cutting edges (28,29) is straight.

3. Apparatus according to claim 1 or claim 2 further comprising an idler support roller (64) rotatably mounted at a location between the cutting edges of the cutting blade (20') for supporting the workpiece as it moves along said path of travel and across said cutting blade.

4. Apparatus according to any preceding claim wherein the outer surface (21) of the blade forms with each of the opposite sides (22,23) an angle A of 25° to 60°.

5. Apparatus according to any preceding claim wherein the cutting edges (28,29) of the blade (20) are parallel to one another.

6. Apparatus according to claim 5, wherein said cutting edges (28,29) are parallel to said longitudinal axis and are equally spaced from said axis.

7. Apparatus according to any preceding claim wherein the cutting edges (28,29) of the blade (20) extend at an angle (B) of 1° to 15° with respect to a line which is perpendicular to said workpiece path of travel.

8. Apparatus according to any preceding claim wherein said cutting blade (20) is mounted at a location spaced from said workpiece path of travel such that said upper surface (21) is at an angle (C) of at least 1° with respect to the adjacent surface (16) of the workpiece in each of said first and second tilted positions.

9. Apparatus according to any preceding claim wherein said conveyor comprises means (54,55) for sensing the position of a workpiece being advanced along said path of travel, and means (53) responsive to said sensing means for reversing the direction of the advance of the workpiece.

10. Apparatus according to claim 9, wherein said cutting blade is mounted on a support member (30) which is fixed to said blade and pivotally mounted on a mounting shaft (31) projecting from the opposite ends of said support member and coaxially along said longitudinal axis, and wherein said means for pivoting said cutting blade includes a hydraulic cylinder (36) operatively connected to said shaft and responsive to said sensing means (54,55) for rotating said shaft in either direction about said longitudinal axis.

11. Apparatus according to claim 10 further comprising an idler support roller (64) rotatably mounted to said support member (30) and extending longitudinally along the length of said cutting blade and perpendicular to the path of travel, with said idler support roller having an outer surface portion which is coplanar with said conveyor (19) when said cutting blade is in said neutral position and so as to assist in supporting the advancing workpiece.

12. Apparatus according to claims 10 or claim 11, wherein said cutting blade (20) comprises two separate elements (22,23) which include respective ones (28,29) of said cutting edges and which are releasably attached to said support member (30) to facilitate replacement thereof.

13. Apparatus according to any one of claims 9 to 12 which further includes additional sensing means (58,59) for monitoring the angular position of said cutting blade.

**14.** Apparatus according to any preceding claim further comprising pinch roll means (62,63) disposed on the side of said workpiece path of travel opposite said conveyor means (19) for engaging the workpiece and preventing the lifting thereof from said conveyor means.

**15.** A method of removing the dross ridges (17,17') formed on the lower surface (16) along each end of a flat metal workpiece (14) during a torch cutting operation or the like, and which includes the use of the apparatus as defined in any of the claims 1 to 14, and comprising the steps of:

(a) advancing the workpiece (14) across said upper surface of said blade in an initial direction which is substantially transverse to the longitudinal direction of said blade, with said lower surface (16) facing said cutting blade and with the dross ridges disposed substantially perpendicular to the direction of advance, the blade being in a neutral position spaced below the workpiece such that one of said dross ridges (17) passes the blade without contact,

(b) tilting the blade so that one of said cutting edges (28) which faces said one dross ridge (17) engages the adjacent surface of the workpiece,

(c) advancing the workpiece in the opposite direction so that said one dross ridge moves in a direction opposing said one cutting edge of the tilted blade and such that said one cutting edge engages and removes said one dross ridge,

(d) oppositely tilting the blade so that the other of said cutting edges (29) engages the adjacent surface of the workpiece, and

(e) advancing the workpiece in said initial direction and so that the other dross ridge (17') moves in a direction opposing said other cutting edge of the oppositely tilted blade and said other cutting edge engages and removes said other dross ridge.

**16.** A method according to claim 15 wherein during each of said advancing steps, the cutting edges of said cutting blade are inclined at an angle (B) of 1° to 15° with respect to a line which is perpendicular to the direction of advance of said workpiece.

**17.** A method according to claim 15 or claim 16, wherein during each of said tilting steps, the upper surface (21) of the blade is at an angle (C) of at least 1° with respect to the adjacent surface of the workpiece.

**18.** A method according to any one of claims 15 to 17 wherein steps (d) and (e) are performed subsequent to steps (a), (b) and (c).

**19.** A method according to any one of claims 15 to 18 wherein steps (d) and (e) are performed subsequent to step (a) and prior to steps (b) and (c).

**Patentansprüche**

**1.** Vorrichtung zur Beseitigung von Schlackengraten (17,17') entlang einer Kante eines metallischen Werkstücks (14), die als Folge eines Brennschneid-Vorgangs oder dergleichen entstehen, bestehend aus einem Transportrollgang (19) für die Auflage und den wahlweisen Vorschub dieses Werkstücks in gegenläufigen Richtungen entlang einer horizontalen Bewegungsbahn; einer um eine feststehende horizontale Längsachse unterhalb der Transportbahn und transversal zu dieser angeordneten drehbar gelagerten Schnittplatte (20) für die Bewegung zwischen einer Position, in der die Schnittplatte zur Beseitigung eines Schlackengrates mit der Unterseite eines Werkstückes in Eingriff steht, und einer neutralen Position, in der diese Platte frei vom Werkstück ist, sowie einer Betätigungs-Anordnung (34,36) für das wahlweise Schwenken der Schnittplatte um diese Achse, **dadurch gekennzeichnet**, daß die Schnittplatte (20) eine obere Fläche (21) und ein Paar längs sich erstreckender gegenüberliegender Seiten (22,23) aufweist, wobei die Seiten je eine längs verlaufende Schnittkante (28,29) am Übergang von der betreffenden Seite zur oberen Fläche ausbilden, und um die Achse schwenkbar ist in eine neutrale Position, in der die obere Fläche parallel zur und abständlich von der Transportbahn das Passieren des Werkstücks außer Eingiff mit der Platte erlaubt, in eine erste gekippte Position, in der eine der Schnittkanten (28) in Einriff mit der Werkstück-Unterseite (16) zur Beseitigung eines Schlackengrades von dieser beim Passieren in der einen Richtung ist, und in eine zweite gekippte Position, in der die andere der Schnittkanten (29) in Eingriff mit der Werkstück-Unterseite zur Beseitigung eines anderen Schlackengrades von dieser beim Passieren in der entgegengesetzten Richtung ist.

2. Vorrichtung nach Anspruch 1, **dadurch gekennzeichnet**, daß die obere Fläche (21) der Schnittplatte (20) generell flach ist, und beide Schnittkanten (28,29) gerade verlaufen.

3. Vorrichtung nach Anspruch 1 oder 2, **dadurch gekennzeichnet**, daß eine freilaufende Tragrolle (64) in einer Position zwischen den Schnittkanten der Schnittplatte (20') zur Stützung des sich entlang der Transportbahn und über die Schnittplatte bewegenden Werkstücks drehbar gelagert ist.

4. Vorrichtung nach einem der vorhergehenden Ansprüche, **dadurch gekennzeichnet**, daß die äußere Fläche (21) der Platte mit der jeweiligen der gegenüberliegenden Seiten (22,23) einen Winkel A von 25° bis 60° ausbildet.

5. Vorrichtung nach einem der vorhergehenden Ansprüche, **dadurch gekennzeichnet**, daß die Schnittkanten (28, 29) der Platte (20) parallel zueinander verlaufen.

6. Vorrichtung nach Anspruch 5, **dadurch gekennzeichnet**, daß die Schnittkanten (28,29) parallel zur Längsachse und gleichabständlich von dieser Achse verlaufen.

7. Vorrichtung nach einem der vorhergehenden Ansprüche, **dadurch gekennzeichnet**, daß sich die Schnittkanten (28,29) der Platte (20) in einem Winkel (B) von 1° bis 15° mit Bezug auf eine Linie erstrecken, die senkrecht zur Transportbahn des Werkstücks verläuft.

8. Vorrichtung nach einem der vorhergehenden Ansprüche, **dadurch gekennzeichnet**, daß die Schnittplatte (20) an einer Stelle abständlich der Werkstück-Transportbahn derart angeordnet ist daß die obere Fläche (21) in einem Winkel (C) von mindestens 1° zur anliegenden Fläche (16) des Werkstücks in jeder der ersten und zweiten gekippten Position ist.

9. Vorrichtung nach einem der vorhergehenden Ansprüche, **dadurch gekennzeichnet**, daß der Transportrollgang Mittel (54,55) zum Abtasten der Position des entlang der Transportbahn vorwärtsbewegten Werkstücks und auf diese Abtastmittel ansprechende Mittel (53) zur Umkehrung der Vorschubrichtung des Werkstückes umfassen.

10. Vorrichtung nach einem der vorhergehenden Ansprüche, **dadurch gekennzeichnet**, daß die Schnittplatte (20) an einem Trägerteil (30) angeordnet ist, das an der Platte befestigt und drehbar auf einer Achswelle (31) festgelegt ist, welche an den gegenüberliegenden Enden des Trägerteils und koaxial mit der Längsachse auskragt, und wobei die Mittel für die Schwenkung der Schnittplatte einen Hydraulikzylinder (36) einschließen, operativ mit der Welle verbunden und ansprechend auf die Abtastmittel (54,55) für die Drehung der Welle in beiden Richtungen um die Längsachse.

11. Vorrichtung nach Anspruch 10, **dadurch gekennzeichnet**, daß ferner eine freilaufende Tragrolle (64) drehbar am Trägerteil (30) angeordnet ist und sich längs entlang der Länge der Schnittplatte und senkrecht zur Transportbahn erstreckt, wobei die freilaufende Tragrolle eine Außenfläche koplanar mit den Transportrollen (19) ausbildet, wenn die Schnittplatte in der neutralen Position ist und so die Auflagerung des vorwärtsbewegten Werkstücks unterstützt.

12. Vorrichtung nach Anspruch 10 oder 11, **dadurch gekennzeichnet**, daß die Schnittplatte (20) aus zwei separaten Elementen (22,23) besteht, die entsprechende SDchnittkanten (28, 29) aufweisen und die wiederlösbar am Trägerteil (30) zum einfachen Austausch derselben befestigt sind.

13. Vorrichtung nach einem der Ansprüche 9 bis 12, **dadurch gekennzeichnet**, daß ferner zusätzliche Abtastmittel (58,59) zur Überwachung der Winkelposition der Schnittplatte vorgesehen sind.

14. Vorrichtung nach einem der vorhergehenden Ansprüche, **dadurch gekennzeichnet**, daß Andrückrollen (62,63) an der dem Transportrollen (19) gegenüberliegenden Seite der Werkstück-Transportbahnangeordnet und zur Verhinderung des Abhebens des Werkstücks vom Transportrollgang in Eingriff mit dem Werkstück sind.

15. Verfahren für die Beseitigung von Schlackengraten (17,17'), die sich an der unteren Fläche (16) entlang eines jeden Endes eines flachen Werkstücks (14) während eines Brennschneid-Vorgangs oder dergleichen bilden, und welches die Verwendung einer Vorrichtung einschließt, wie sie zumindest in einem der vorhergehenden Ansprüche 1 bis 14 charakterisiert ist, und **gekennzeichnet durch** die Verfahrensschritte

a) Vorschub des Werkstücks (14) über die obere Fläche der Platte in einer Anfangsrichtung, welche im wesentlichen trannversal zur Längsrichtung der Platte verläuft, die untere Fläche (16) der Schnittplatte zugewandt und mit den Schlackengraten weitgehend im rechten Winkel zur Vorschubrichtung, wobei die Platte in einer neutralen Position derart abständlich unterhalb des Werkstücks positioniert ist, daß ein Schlackengrat (17) ohne Kontsftt mit dieser Platte passieren kann;

b) Schwenken der Platte, so daß eine der Schnittkanten (28), welche einem Schlackengrat (17) zugewandt ist, in Eingriff mit der angrenzenden Fläche des Werkstücks kommt;

c) Vorschub dieses Werkstücks in der entgegengesetzten Richtung, so daß dieser eine Schlackengrat in Richtung auf eine der entgegenstehenden Schnittkanten der gekippten Platte hin bewegt wird, und zwar derart daß diese eine Schnittkante in Eingriff mit dem Schlackengrat kommt und diesen beseitigt;

d) Schwenken der Platte in die entgegengesetzte Kippstellung so daß die andere dieser Schnittkanten (29) in Eingriff mit der angrenzenden Fläche (16) des Werkstücks kommt, und

e) Vorschub dieses Werkstücks in der anfänglichen oder ursprünglichen Richtung, so daß der andere Schlackengrat (17') in Richtung auf die andere diesem entgegenstehende Schnittkante der entgegengesetzt gekippten Schnittplatte hin bewegt wird, und die andere Schnittkante in Eingriff mit dem anderen Schlackengrat in Eingriff kommt und diesen beseitigt.

16. Verfahren nach Anspruch 15, **dadurch gekennzeichnet**, daß wahrend jedes dieser Vorschubschritte die Schnittkanten der Schnittplatte in einem Winkel (B) von 1° bis 15° mit Bezug auf eine Linie senkrecht zur Vorschubrichtung des Werkstücks geneigt ist.

17. Verfahren nach Anspruch 15 oder 16, **dadurch gekennzeichnet**, daß während jedes der Schwenkschritte die obere Fläche (21) der Platte in einem Winkel (C) von mindestens 1° mit Bezug auf die benaschbarte Fläche des Werkstückes ist.

18. Verfahren nach einem der Ansprüche 15 bis 17, **dadurch gekennzeichnet**, daß die Schritte (d) und (e) nachfolgend den Schritten (a), (b) und (c) ausgeführt werden.

19. Verfahren nach einem der Ansprüche 15 bis 18, **dadurch gekennzeichnet**, daß die Schritte (d) und (e) nachfolgend dem Schritt (a) und vor den Schritten (b) und (c) ausgeführt werden.

**Revendications**

1. Appareil pour enlever une arête en scories (17, 17') le long d'un bord d'une pièce métallique (14) du type résultant d'une opération de découpe au chalumeau ou équivalent, et comprenant :

un convoyeur (19) pour supporter et avancer sélectivement une pièce métallique dans des directions opposées le long d'un chemin de déplacement horizontal ;

une lame coupante (20) montée à pivotement, autour d'un axe horizontal longitudinal fixe audessous dudit chemin de déplacement et s'étendant transversalement par rapport à celui-ci, entre une position de fonctionnement dans laquelle la lame peut engager dans le côté inférieur de la pièce pour lui enlever une arête en scories et une position neutre dans laquelle la lame est à l'écart de la pièce, et des moyens d'entraînement (34, 36) pour pivoter sélectivement la lame coupante autour dudit axe longitudinal ;

caractérisé en ce que la lame coupante (20) a une surface supérieure (21) et deux côtés opposés (22, 23) s'étendant longitudinalement, lesdits côtés définissant chacun une arête coupante (28, 29) s'étendant longitudinalement à la jonction du côté respectif avec ladite surface supérieure, et peut être pivotée autour dudit axe vers une position neutre dans laquelle ladite surface supérieure est parallèle audit chemin de déplacement et à l'écart de celui-ci pour permettre à la pièce de se déplacer à l'écart de la lame, vers une première position inclinée dans laquelle l'une desdites arêtes coupantes (28) est positionnée pour engager dans la face inférieure (16) de la pièce, et pour lui enlever une arête en scories lorsqu'elle se déplace dans une direction, et vers une seconde position inclinée dans laquelle l'autre desdites arêtes coupantes (29) est positionnée pour engager dans la face inférieure de la pièce et lui enlever une autre arête en scories lorsqu'elle se déplace dans la direction opposée.

**2.** Appareil selon la revendication 1, dans lequel ladite surface supérieure (21) de la lame coupante est généralement plate, et chacune desdites arêtes coupantes (28, 29) est droite.

**3.** Appareil selon la revendication 1 ou la revendication 2 comprenant en outre un rouleau support fou (64) monté rotatif en une position entre les arêtes coupantes de la lame coupante (20') pour supporter la pièce lors de son mouvement le long dudit chemin de déplacement et en travers de ladite lame coupante.

**4.** Appareil selon l'une quelconque des revendications précédentes dans lequel la surface extérieure (21) de la lame forme avec chacun des côtés opposés (22, 23) un angle A de 25° à 60°.

**5.** Appareil selon l'une quelconque des revendications précédentes dans lequel les arêtes coupantes (28, 29) de la lame (20) sont parallèles l'une à l'autre.

**6.** Appareil selon la revendication 5, dans lequel lesdites arêtes coupantes (28, 29) sont parallèles audit axe longitudinal et sont espacées également à l'écart dudit axe.

**7.** Appareil selon l'une quelconque des revendications précédentes dans lequel les arêtes coupantes (28, 29) de la lame (20) se développent selon un angle (B) de 1° à 15° par rapport à la ligne qui est perpendiculaire audit chemin de déplacement de la pièce.

**8.** Appareil selon l'une quelconque des revendications précédentes dans lequel ladite lame coupante (20) est montée en une position espacée par rapport audit chemin de déplacement de pièce de telle façon que ladite surface supérieure (21) est à un angle (C) d'au moins 1° par rapport à la surface adjacente (16) de la pièce dans chacune desdites première et seconde positions inclinées.

**9.** Appareil selon l'une quelconque des revendications précédentes dans lequel ledit convoyeur comprend des moyens (54, 55) pour détecter la position d'une pièce progressant le long dudit chemin de déplacement, et des moyens (53) répondant audit moyen de détection pour inverser la direction de progression de la pièce.

**10.** Appareil selon la revendication 9, dans lequel ladite lame coupante est montée sur un membre support (30) qui est fixé à ladite lame et monté à pivotement sur un arbre de montage (31) s'étendant depuis les extrémités opposées dudit membre support et coaxialement le long dudit axe longitudinal, et dans lequel ledit moyen pour pivoter ladite lame coupante comprend un vérin hydraulique (36) fonctionnellement connecté audit arbre et répondant auxdits moyens de détection (54, 55) pour pivoter ledit arbre dans l'une ou l'autre des directions autour dudit axe longitudinal.

**11.** Appareil selon la revendication 10 comprenant en outre un rouleau support fou (64) monté rotatif sur ledit membre support (30) et s'étendant longitudinalement le long de la longueur de ladite lame coupante et perpendiculairement au chemin de déplacement, ledit rouleau support fou ayant une portion de surface extérieure qui est coplanaire avec ledit convoyeur (19) lorsque ladite lame coupante est dans ladite position neutre et de façon à participer au support de la pièce qui progresse.

**12.** Appareil selon la revendication 10 ou la revendication 11, dans lequel ladite lame coupante (20) comprend deux éléments séparés (22, 23) qui incluent l'une des arêtes coupantes respectives (28, 29) et qui sont liés de manière détachable audit membre support (30) pour faciliter son remplacement.

**13.** Appareil selon l'une quelconque des revendications 9 à 12 qui comprend en outre des moyens de détection additionnels (58, 59) pour commander la position angulaire de ladite lame coupante.

**14.** Appareil selon l'une quelconque des revendications précédentes comprenant en outre des moyens de rouleau de serrage (62, 63) disposés sur le côté dudit chemin de déplacement de pièce opposé audit moyen convoyeur (19) pour être en appui sur la pièce et empêcher qu'elle se soulève hors dudit moyen convoyeur.

**15.** Procédé pour enlever les arêtes en scories (17, 17') formées sur la surface inférieure (16) le long de chaque extrémité d'une pièce métallique plate (14) pendant une opération de découpe au chalumeau ou équivalent, et qui comprend l'utilisation de l'appareil tel que défini dans l'une quelconque des revendications 1 à 14, et comprenant les étapes de :

(a) avancer la pièce (14) en travers de ladite surface supérieure de ladite lame dans une direction initiale qui est sensiblement transversale par rapport à la direction longitudinale de ladite lame, avec ladite surface inférieure (16) faisant face à ladite lame coupante et avec les arêtes en scories disposées sensiblement perpendiculairement à la direction de progression, la lame étant en une position neutre à l'écart et au-dessous de la pièce de telle sorte que l'une des arêtes en scories (17) dépasse la lame sans contact,

(b) incliner la lame de telle sorte que l'une desdites arêtes coupantes (28) qui fait face à ladite arête en scories (17) engage dans la surface adjacente de la pièce,

(c) avancer la pièce dans la direction opposée de telle sorte que ladite arête en scories se déplace dans une direction opposée à ladite arête coupante de la lame inclinée et de telle sorte que ladite arête coupante engage et enlève ladite arête en scories,

(d) incliner la lame dans l'autre sens de telle sorte que l'autre desdites arêtes coupantes (29) engage dans la surface adjacente de la pièce, et

(e) avancer la pièce dans ladite direction initiale et de telle sorte que l'autre arête en scories (17') se déplace dans une direction opposée à ladite autre arête coupante de la lame inclinée dans l'autre sens et que ladite autre arête coupante engage et enlève ladite autre arête en scories.

**16.** Procédé selon la revendication 15 dans lequel durant chacune des étapes d'avance, les arêtes coupantes de ladite lame coupante sont inclinées selon un angle (B) de 1° à 15° par rapport à la ligne qui est perpendiculaire à la direction de progression de ladite pièce.

**17.** Procédé selon la revendication 15 ou la revendication 16, dans lequel durant chacune des étapes d'inclinaison, la surface supérieure (21) de la lame est à un angle (C) d'au moins 1° par rapport à la surface adjacente de la pièce.

**18.** Procédé selon l'une quelconque des revendications 15 à 17 dans lequel les étapes (d) et (e) sont réalisées à la suite des étapes (a), (b) et (c).

**19.** Procédé selon l'une quelconque des revendications 15 à 18 dans lequel les étapes (d) et (e) sont réalisées à la suite de l'étape (a) et avant les étapes (b) et(c).

Fig-1

Fig-2

Fig-3

_Fig - 4_

Fig-5

Fig-6

15

Fig-7

Fig-7A

Fig-8